# EUROPÄISCHE PATENTSCHRIFT

(11) **EP 1 179 356 B1**
(45) Veröffentlichungstag und Bekanntmachung des Hinweises auf die Patenterteilung: **02.01.2008**
(21) Anmeldenummer: 01115731.0
(22) Anmeldetag: 06.07.2001
(51) Int. Cl.: B01D 29/15, B01D 29/52, B01D 29/66, B01D 35/30

(54) **Filterelement mit einem auf einen Stützkörper aufgebrachten Filtermedium**
Filter element with filter media on a support member
Elément filtrant avec matériau filtrant sur un support interne

(30) Priorität: 07.08.2000 DE 10038412
(43) Veröffentlichungstag der Anmeldung: 13.02.2002
(73) Patentinhaber: Mann + Hummel GmbH, 71638 Ludwigsburg (DE)
(72) Erfinder: Gohle, Peter, 67635 Schwegenheim (DE); Rösgen, André, 73630 Remshalden (DE); Thalmann, Christian, 67346 Speyer (DE); Stahl, Holger, 74639 Zweiflingen (DE); Poh, Ralf, 67434 Neustadt (DE)
(74) Vertreter: Voth, Gerhard

(56) Entgegenhaltungen:
- WO-A-92/00798
- DE-A- 19 810 518
- DE-A- 19 833 381
- GB-A- 1 337 170
- US-A- 5 723 051

## Beschreibung

### Stand der Technik

Die Erfindung betrifft ein Filterelement, welches einen Stützkörper aufweist, auf den ein biegbares Filtermedium aufgebracht ist, nach der Gattung des Patentanspruches 1. Au-ßerdem betrifft die Erfindung einen Filter mit einem Gehäuse, in das das genannte Filterelement eingebaut ist, nach der Gattung des Patentanspruches 7. Weiter betrifft die Erfindung ein Verfahren zum Betrieb des Filters nach der Gattung des Patentanspruchs 10.

Filterelemente der eingangs beschriebenen Art sind bekannt. Zum Beispiel ist in der DE 198 33 381 A1 ein Filterelement offenbart, welches als Stützkörper eine Schraubenfeder aufweist, auf die eine Filterfolie aufgebracht ist. Die Filterfolie enthält feine Schlitze, die zum Durchlass des zu filternden Fluids und zur Rückhaltung der auszufilternden Partikel geeignet sind. Alternativ zur Folie können zur Filterung auch Siebnetze verwandt werden.

Diese Filter werden z. B. zur Flüssigkeitsfilterung als Rückspülfilter verwendet. Die Rückspülung dient zur Reinigung der Rohseite des Filtermediums, wenn diese verschmutzt ist, wodurch die Öffnungen zum Durchlass des Fluides verstopft werden. Durch die Rückspülimpulse, aber auch durch eine pulsierende Fluidströmung wird das Filtermedium auf dem Stützkörper einer mechanischen Beanspruchung unterzogen. Durch die Lastwechsel, die das zu filternde Fluid auf das Filtermedium ausübt, findet während der Dauer des Betriebs eine mechanische Ermüdung des Filtermediums statt, welche zu einem Versagen führen kann. Die Filterfolie kann reißen, wodurch die Reinheit des Filtrats nicht mehr gewährleistet werden kann.

Aufgabe der Erfindung ist es daher, ein Filterelement mit Stützkörper und darauf aufgebrachtem Filtermedium zu schaffen, welches bei Erreichung langer Standzeiten zuverlässig im Betrieb ist. Diese Aufgabe wird durch die Merkmale des Patentanspruches 1 sowie des Patentanspruches 7 gelöst.

### Vorteile der Erfindung

Das erfindungsgemäße Filterelement ist dadurch gekennzeichnet daß das Filtermedium (11) derart auf dem Stützkörper (10) befestigt ist, dass eine Relativbewegung zwischen diesen Bauteilen in Folge der Fluiddurchströmung des Filterelementes verhindert wird, derart dass das Filtermedium (11)
- auf mindestens 3% der durch den Stützkörper (10) zur Verfügung gestellten Stützfläche (20) spielfrei anliegt, wobei sich dieser Flächenanteil aus gleichmäßig über die Stützfläche verteilten Stützbereichen (23) zusammensetzt,
- auf höchstens 15% der Stützfläche eine radiale Spieltoleranz zu einer durch den Stützkörper gebildeten, die Stützfläche enthaltenden Mantelfläche (24) aufweist, die größer als 0,2 mm ist und
- außerhalb der genannten Bereiche der Stützfläche eine radiale Spieltoleranz zu der Mantelfläche (24) aufweist, die höchstens 0,2 mm beiträgt.
Dies ist auch dann der Fall, wenn die Fluiddurchströmung eine pulsierende Beanspruchung des Filtermediums zufolge hat. Es hat sich nämlich gezeigt, dass die mechanische Beanspruchung des Filtermediums in erster Linie durch die Relativbewegungen auf dem Stützkörper bzw. durch ein Schwingen von Teilen des Filtermediums aufgrund der Erregung durch das pulsierende zu filternde Fluid erzeugt werden. Die pulsierende Beanspruchung kann auch durch eine Abreinigung des Filterelementes im Rahmen einer Rückspülung mit schon gereinigtem Fluid entstehen. Eine andere kritische Beanspruchung des Filtermediums stellt das Verformen durch Eindrücken bzw. Ausbeulen von ungestützten Teilbereichen des Filtermediums dar. Dies kann bei einer Umkehr des Druckgefälles am Filtermedium geschehen, z.B. während eines Rückspülvorgangs des zugehörigen Filters. Wird jedoch die Relativbewegung zwischen Filtermedium und Stützkörper verhindert, so wird dadurch gleichzeitig das Filtermedium soweit durch den Stützkörper stabilisiert, dass auch Schwingungen des Filtermediums wirksam unterbunden werden.

Das biegbare Filtermedium wird um den Stützkörper herumgelegt. Dafür muss der Stützkörper zylindrisch ausgeführt sein, um eine gleichmäßige Biegung des Filtermediums zu gewährleisten. Allerdings kann der Querschnitt des Stützkörpers von der Kreisform abweichen. Denkbar sind z. B. elliptische Querschnitte. Als Filtermedium können Siebmatten dienen, welche aus gewebten Drähten gefertigt sind. Eine andere Möglichkeit ist die Verwendung von Spalt- oder Lochfolien. Diese Folien sind ausgesprochen dünn, wobei die Spalte bzw. Löcher zur Durchleitung des zu filternden Fluids und zur Rückhaltung der Partikel aus dem Fluid geeignet sind. Die Größe der Löcher oder Spalte beeinflusst direkt die Partikelgröße der zurückgehaltenen Partikel. Dabei ist eine Durchströmung des Filtermediums von außen nach innen genauso denkbar, wie von innen nach außen. Eine Rückspülung wird jeweils durch eine Umkehr der Flussrichtung des Fluids erreicht.

Gemäß der Erfindung liegt das Filtermedium auf mindestens 3 % der durch den Stützkörper zur Verfügung gestellten Stützfläche spielfrei an. Der Kontakt kommt in verschiedenen Stützbereichen zustande, welche gleichmäßig über die gesamte Stützfläche verteilt sind. Toleranzen zwischen den Stützbereichen ergeben sich beispielsweise aus Fertigungsungenauigkeiten des Stützkörpers. In dem Hauptteil
der restlichen Stützfläche wird eine radiale Spieltoleranz zur durch den Stützkörper gebildeten Mantelfläche von höchstens 0,2 mm zugelassen. Dadurch wird gewährleistet, dass die Stützbereiche aufgrund der Toleranzen zwischen Stützkörper und Filtermedium zufällig auf den Stützbereich verteilt sind, wobei die jeweiligen Stützbereiche nah genug beieinander liegen, damit ein Schwingen des Filtermediums zwischen den einzelnen Stützbereichen wirksam unterbunden wird.

Die durch den Stützkörper zur Verfügung gestellte Stützfläche weist eine geringere Fläche als die Mantelfläche des Stützkörpers auf. Die Mantelfläche ist mit Durchbrechungen versehen, um das gefilterte Fluid von der Reinseite der Folie in das Innere des Stützrohres gelangen zu lassen. Die Stützfläche wird demnach durch die Stege zwischen den Durchbrechungen gebildet. Ein Stützrohr kann z. B. aus einer Schraubenfeder bestehen. Eine andere Möglichkeit ist die Verwendung eines zu einem Rohr gebogenen Lochbleches. Besonders vorteilhaft ist die Verwendung sogenannter Spaltrohre. Diese bestehen aus einem schraubenartig aufgewickelten Strang, der z.B. einen dreieckigen Querschnitt aufweisen kann. Dieser kann zusätzlich mit Axialstützen versehen werden, um eine höhere Stabilität zu erlangen. Die Stützfläche kann vorteilhaft auf die Kante des dreieckigen Querschnitts des Stranges minimiert werden, wodurch ein möglichst großer Anteil der Mantelfläche direkt der Filterung zur Verfügung steht und nicht durch den Stützkörper abgedeckt wird.

Es hat sich gezeigt, dass auch bei Überschreiten des zulässigen Toleranzmaßes von 0,2 mm zwischen Filtermedium und Stützkörper auf höchstens 15% der Stützfläche eine gleichmäßige Verteilung der Stützbereiche auf der Stützfläche gewährleistet ist. Die Überschreitung der eigentlichen Spieltoleranz kommt z. B. durch einen Faltenwurf in der verwendeten Filterfolie zustande, die beim Biegen derselben um den Stützkörper entsteht. Diese Verformungen haben aber aufgrund ihrer Geometrie eine höhere Eigensteifigkeit, die ebenfalls zu einer Verhinderung von Schwingungen des Filtermediums führt. Daher ist eine zusätzliche Stützung durch Stützbereiche in diesen Zonen des Filtermediums nicht erforderlich.

Gemäß einer besonderen Ausgestaltung der Erfindung ist das Filtermedium derart auf den Stützkörper aufgebracht, dass in tangentialer Richtung bezüglich des Umfangs des Stützkörpers lediglich Zugkräfte im Filtermedium wirken. Dies lässt sich dadurch erreichen, dass das Filtermedium unter Zugbeanspruchung auf den Stützkörper aufgebracht wird. Eventuell auftretende Druckkräfte aufgrund der Biegung des Filtermediums um den Stützkörper herum werden dann durch die Zugkräfte überlagert. Diese Zugkräfte müssen also größer sein, als die größte auftretende Druckkraft aufgrund des Biegemoments am Filtermedium, welche auf der Oberfläche der Innenseite des zylindrischen Filtermediums auftritt.

Besonders vorteilhaft ist es, wenn die in der Folie herrschenden Zugkräfte so groß sind, dass sie zusätzlich Druckkräfte in der Folie übersteigen, die aufgrund der pulsierenden Beanspruchung der Folie durch das Fluid zustande kommen. Ein Druckwechsel an der Folie kann nämlich zu einer kurzzeitigen Kontraktion derselben führen, wodurch Druckkräfte entstehen können. Um zu vermeiden, dass diese zu einer kurzzeitigen Ablösung der Folie von dem Stützkörper führen, kann die in der Filterfolie vorliegende Zugspannung auf einfache Weise erhöht werden.

Die Zugkräfte im Filtermedium führen dazu, dass sich dieses besser an den Stützkörper anschmiegt. Dadurch lässt sich die radiale Spieltoleranz verringern, wodurch mehr Stützbereiche des Filtermediums auf der Stützfläche entstehen. Der Verband zwischen Filtermedium und Stützkörper wird dadurch im Sinne der Erfindung stabiler gegen Schwingungen bzw. Relativbewegung zwischen den beiden Bauteilen.

Gemäß einer besonderen Ausgestaltung des Filterelementes ist dieses derart hergestellt, dass die Zugspannung betrachtet über die radiale Dicke des Filtermediums einen im Durchschnittswert von mindestens 5 N/mm² aufweist. Der Durchschnittswert ergibt sich aus der Berechnung der Überlagerung eines eventuellen Biegemomentes, welches sich durch die Elastizität der um den Stützkörper gebogenen Folie ergibt und der Zugspannung, die durch das Montageverfahren in dem Filtermedium entsteht. Es hat sich gezeigt, dass ein Durchschnittswert von mindestens 5 N/mm² ausreicht, um eine unzulässige Beanspruchung desselben zu verhindern. Wie stark die Vorspannung des Filtermediums letztendlich sein muss, ist vom Einzelfall, also der Intensität der pulsierenden Beanspruchung bzw. der Druckwechsel am Filterelement abhängig.

Eine besondere Ausgestaltung des Filterelementes ergibt sich bei Filterfolien von einer Dicke von 0,1 - 1 mm, welche als Filtermedium verwendet werden. Bei diesen Folien führen Zugspannungen an der radial außen gelegenen Oberfläche der Filterfolie von wenigstens 8 N/mm² zu einem ausreichenden Schutz der Filterfolie vor unzulässig hohen Beanspruchungen. Dieser Wert läßt sich im Rahmen einer Qualitätskontrolle einfach nachmessen, wodurch die Herstellung zuverlässiger Filterelemente möglich wird.

Eine vorteilhafte Ausgestaltung der Erfindung ergibt sich, wenn die Kanten des Filtermediums, welche dieses entlang der Längsausdehnung des Filterelementes zu einem zylindrischen Körper zusammenschließen, miteinander verlötet werden. Hierdurch entsteht eine feste Fügung des Filtermediums und gleichzeitig eine Abdichtung der Kanten desselben. Außerdem kann die Lötverbindung dauerhaft evtl. Zugspannungen aufnehmen, die auf das Filtermedium in tangentialer Richtung wirken. Dieser Effekt kann noch verbessert werden, wenn die Oberfläche der Lötverbindung durch Verwendung eines Versteifungsstreifens vergrößert wird, welcher über den zusammengefügten Kanten des Filtermediums angebracht ist. Hierdurch entsteht ein Spalt zwischen Verstärkungsstreifen und Filtermedium, welcher durch den Lotwerkstoff ausgefüllt werden kann.

Im Vergleich zu einer standardmäßigen überlappenden Lötung der Filterfolie hat die Verwendung eines Versteifungsstreifens den großen Vorteil, dass sich keine Stufe des Filtermediums auf den Stützkörper ergibt. Dadurch wird die Anlage des Filtermediums auf dem Stützkörper im Sinne des Erfindungsgedankens noch verbessert. Das Filtermedium wird auf Stoß gelegt und anschließend mit dem Verstärkungsstreifen verlötet. Dabei kann dieser radial sowohl außen als auch innen am Filtermedium angebracht sein. In dem Fall, dass der Versteifungsstreifen innen angebracht ist, muss hierzu im Filtermedium eine entsprechende Nut vorgesehen werden, um eine Stufe des auf dem Stützkörper anliegenden Filtermediums in jedem Fall zu vermeiden.

Das Filterelement kann in einem Filter mit öffenbarem Gehäuse eingesetzt werden. Dieser wird in das Gehäuse eingesetzt, so dass eine mit einem Einlass versehene Rohseite des Filters von einer Reinseite des Filters getrennt ist, welche mit einem Auslaß versehen ist. In vorteilhafter Weise kann das Filtergehäuse zusätzlich eine Rückspüleinrichtung aufweisen, welche die Umkehr der Durchflussrichtung am Filtermedium gestaltet. Auf diese Weise ist eine einfache Abreinigung der Rohseite des Filtermediums möglich, wobei die abgereinigten Partikel aus dem Filtergehäuse ausgetragen werden müssen.

Gemäß einer weiteren Ausgestaltung der Erfindung sind zumindest als Auslassventile für den abgereinigten Schlamm schnelle Ventile vorgesehen, die Schaltzeiten von weniger als 0,4 Sekunden aufweisen. Mit Hilfe dieser Ventile, die z.B. als Magnetventile ausgeführt sein können, ist eine sogenannte Impulsabreinigung der Filterfolie möglich. Hierdurch wird eine höhere Effektivität der Abreinigung erzielt. Die Verwendung von schnellen Ventilen für Filterelemente mit Filterfolie ist nur möglich, wenn diese gemäß der beschriebenen Ausführungsform auf dem Stützkörper verspannt werden. Die schnellen Lastwechsel durch die Impulsabreinigung würden sonst, wie bereits erwähnt, zu einem Versagen der Filterfolie führen, welches aufgrund der starken mechanischen Wechselbeanspruchung bewirkt würde. Vorteile einer Impulsabreinigung sind eine geringe Rückspülmenge, die während des Rückspülvorgangs notwendig wird. Das Fluid zum Rückspülen ist bereits gefiltert, wodurch bei größeren Rückspülungen Verluste entstehen würden. Dadurch würde der Filterprozess weniger effektiv. Durch Verringerung der Rückspülmenge lassen sich damit die Prozesskosten für die Reinigung des zu reinigenden Fluides senken.

Die Ventile können durch eine Steuerung angesteuert werden. Durch diese Steuerung lässt sich der Abreinigungsprozess optimal an die Bedingung des aktuellen Anwendungsfalles anpassen. Veränderbar sind die Rückspülintervalle, aber auch die Charakteristik des Rückspülvorganges. Dieser kann z.B. bei elektrisch betätigten Ventilen durch den Stromverlauf der Betätigungsenergie für die Ventile beeinflusst werden.

Im Normalfall werden die Rückspülfilter als Batterie von mehreren Filterelementen betrieben. Im Falle einer Rückspülung fällt damit nur eines der Filterelemente aus, während die anderen weiter der Filtration des zu filternden Fluides zur Verfügung stehen. Durch die besonders kurzen Rückspülimpulse ist aber für bestimmte Anwendungen auch die Verwendung nur eines Filterelementes denkbar. In diesen Fällen wird durch die Impulsabreinigung der Filtervorgang nur sehr kurz unterbrochen, was sich bei bestimmten Anwendungsfällen nicht auswirkt.

Gemäß einer besonderen Ausgestaltung der Erfindung bestehen auch die Einlassventile, die rohseitig des Filterelementes angebracht sind, aus schnellen Ventilen mit kurzen Schaltzeiten. Hierdurch lässt sich der Rückspülprozess besonders effektiv gestalten. Beim Rückspülvorgang werden die Einlassventile geschlossen und die Auslassventile geöffnet. Auf diese Weise findet ein Rückfluss von der Reinseite des Filters durch die Auslassventile statt, wodurch der auf der Rohseite des Filterelementes befindliche Schmutz abgereinigt und durch den Schlammauslass ausgetragen wird. Hierdurch lassen sich Flüssigkeitsverluste am Einlass der Filtervorrichtung vermeiden.

Zum Betrieb des erfindungsgemäßen Filters ist ein Verfahren besonders vorteilhaft, welches das Öffnen der am Rückspülvorgang beteiligten Ventile, den Austrag des meist schlammförmigen Filtrats und das Schließen der erwähnten Ventile beinhaltet. Für den gesamten Vorgang wird eine Dauer von weniger als 2 Sekunden pro Filterelement benötigt. Die kurze Dauer des Verfahrens hat die bereits beschriebenen Vorteile der Impulsabreinigung der Filterelemente. Während des Verfahrens werden zumindest die Auslassventile derjenigen Filterelemente geöffnet, welche abgereinigt werden sollen. Sind zusätzlich Einlassventile vorgesehen, welche den Abschluss der Rohseite der Filterelemente gegenüber den Zuführleitungen ermöglichen, so werden diese ebenfalls geschlossen. Dabei kann eine zeitliche Versetzung beim Öffnen/Schließen von Einlass- und Auslassventilen zu besonders vorteilhaften Abreinigungseffekten führen, die in Abhängigkeit des jeweiligen Anwendungsfalles ermittelt werden müssen.

Die kurzen Zeiträume der Impulsabreinigung steigern die Leistungsfähigkeit des Filtersystems auch dahingehend, dass Fluide mit hoher Schmutzkonzentration gereinigt werden können. In diesen Fällen ist eine häufige Abreinigung notwendig. Diese kann gewährleistet werden, da die einzelnen Abreinigungsimpulse sehr kurz sind, so dass die Filterleistung pro Zeiteinheit der einzelnen Filterelemente durch die Abreinigung nur unwesentlich verkürzt werden.

Diese und weitere Merkmale von bevorzugten Weiterbildungen der Erfindung gehen au-ßer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: das erfindungsgemäße Filterelement im teilweise aufgeschnittenem Zustand,
- Figur 2: einen Ausschnitt aus dem Schnitt A-A gemäß Figur 1,
- Figur 3: den Schnitt B-B gemäß Figur 1,
- Figur 4: den vergrößerten Schnitt durch einen Stützkörper aus Lochblech mit aufgebrachter Filterfolie,
- Figur 5: die Anordnung eines Filterelementes in einem Gehäuse mit Einrichtung zur Rückspülung des Filters als Mittelschnitt und
- Figur 6: den schematischen Aufbau eines modularen Gehäuses mit mehreren Filterelementen und schnell schaltenden Ventilen.

### Beschreibung der Ausführungsbeispiele

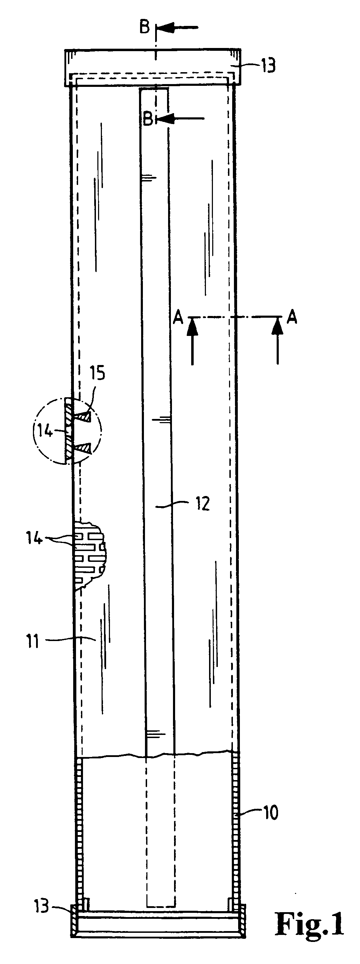

Das Filterelement gemäß Figur 1 besteht aus einem Stützkörper 10, einem Filtermedium 11, welches um den Stützkörper 10 geschlungen ist und mit Hilfe eines Verstärkungsstreifens 12 befestigt ist und zwei Endringe 13, welche die stirnseitigen Kanten von Stützkörper und Filtermedium verstärken und zur Einspannung des Filterelements in einem nicht dargestellten Gehäuse geeignet sind. Bei dem Filtermedium handelt es sich um eine Spaltfolie, wie in einem Ausschnitt in Figur 1 dargestellt ist. Die Spalte 14 entsprechen in der Spaltweite der Teilchengröße, der auszufilternden Partikel. Der Stützkörper besteht aus einem Spaltrohr, wobei dieses aus einem Strang mit Dreiecksprofil 15 in Gestalt einer Schraubenfeder aufgewickelt ist.

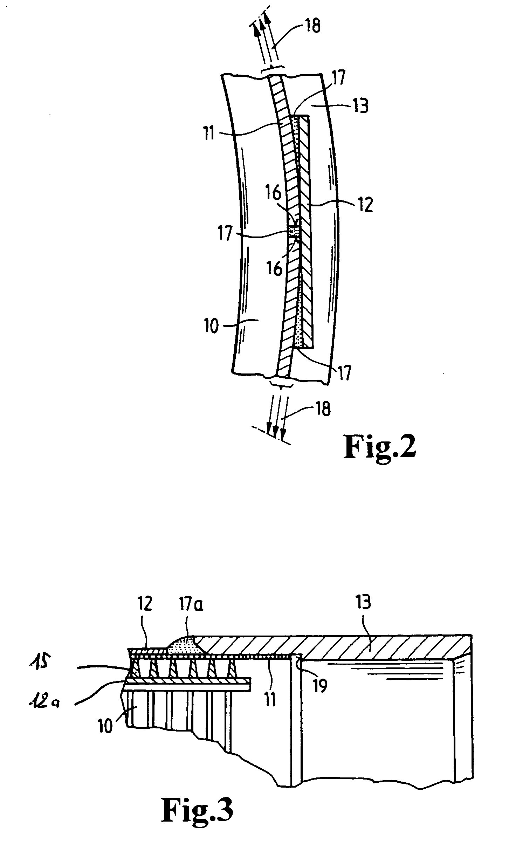

Wie Figur 2 zeigt, ergeben Stützkörper 10 und Filtermedium 11 einen Verband, wobei das Filtermedium auf den Stützkörper aufgebracht ist. Die Kanten 16 des Filtermediums 11 sind durch eine Lötverbindung 17 auf dem Stützkörper zusammengefügt. Der Verstärkungsstreifen 12 sorgt für eine Oberflächenvergrößerung der Lötverbindung 17, so dass diese Verbindung steifer wird und Zugkräfte 18 aufnehmen kann, welche in tangentialer Richtung auf das Filtermedium wirken. Die Zugkräfte im Filtermedium nehmen in radialer Richtung zu, da diese durch ein Biegemoment des Filtermediums auf dem Stützkörper überlagert sind, welches im inneren Teil des Filtermediums Druckkräfte und im äußeren Teil Zugkräfte erzeugt.

Der Figur 3 ist zu entnehmen, wie der Verband aus Stützkörper 10 und Filtermedium 11 in den Endring 13 eingebracht wird. Dieser weist auf der Innenseite einen Absatz 19 auf, der das Fügen des Endrings auf das Filtermedium erleichtern soll. Nach dem Fügen wird das Filtermedium mit dem Endring 13 durch eine Lötverbindung 17a fixiert. Weiterhin zu erkennen ist das Ende des Verstärkungsstreifens 12 auf der Spaltfolie, die das Filtermedium 11 bildet. Auch der Strang mit Dreiecksprofil 15, der das Spaltrohr bildet, ist durch einen Verstärkungssteg 12a stabilisiert. Von diesem Verstärkungssteg 12a können mehrere am Innenumfang des Spaltrohres angeordnet sein. Neben einer Versteifung des Spaltrohrs als Ganzem führt der Verstärkungssteg 12a auch zu einer Einhaltung eines konstanten Abstandes der einzelnen Wicklungen des Spaltrohres untereinander. Das Spaltrohr lässt sich als Bauteil einfacher handhaben, wodurch die Herstellung des Filterelementes erleichtert wird.

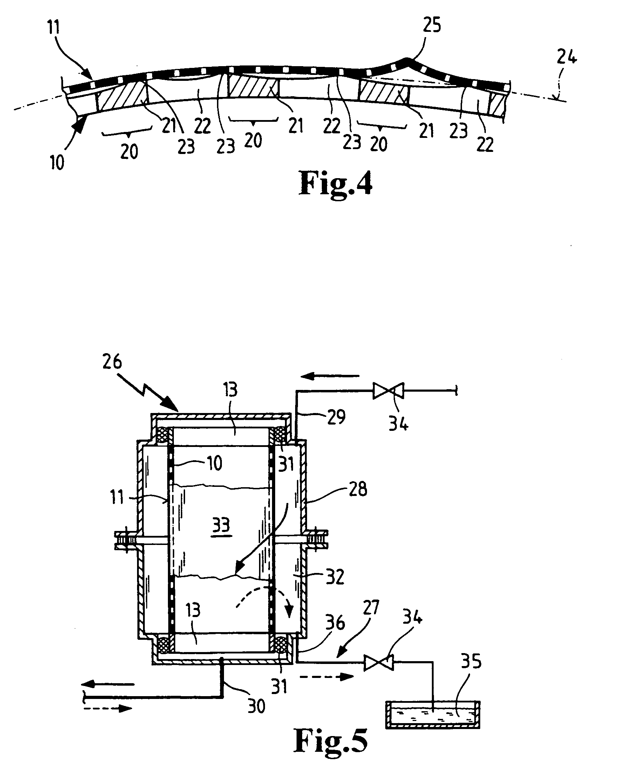

Der Figur 4 lässt sich ein Detail des Verbandes zwischen Stützkörper 10 und Filtermedium 11 entnehmen, wobei der Stützkörper durch ein Lochblech gebildet ist. Eine Stützfläche 20 des Stützkörpers 10 wird gebildet durch Stege 21 zwischen den Löchern 22 des Lochbleches. Teile der Stützfläche sind Stützbereiche 23, auf denen das Filtermedium 11 anliegt. Außerhalb der Stützbereiche ergibt sich eine radiale Toleranz zwischen Stützkörper 10 und Filtermedium 11, welche in den meisten Teilen 0,2 mm nicht überschreitet. Diese Toleranz wird gemessen als Abstand zwischen der Innenseite des Filtermediums 11 und einer Mantelfläche 24, welche durch die Außenseite des Stützkörpers gebildet wird.

In Teilbereichen kann das Filtermedium auch weiter als 0,2 mm vom Stützkörper entfernt sein, wie z. B. im Bereich einer Falte 25 im Filtermedium. Diese ist jedoch aufgrund ihres Profils als Versteifung des Filtermediums zu betrachten, so dass Schwingungen im Filtermedium auch in diesem Bereich vermieden werden.

Aus Figur 5 geht der Aufbau eines Flüssigkeitsfilters 26 mit Rückspüleinrichtung 27, bestehend aus einem öffenbaren Gehäuse 28 mit Einlass 29 und Auslaß 30 hervor.

In das Gehäuse 28 ist das erfindungsgemäße Filterelement, bestehend aus Endringen 13, Stützkörper 10 und Filtermedium 11, mit Hilfe von Dichtringen 31 eingebracht. Die Flussrichtung des zu filternden Fluids ist in den angedeuteten Leitungen sowie im Gehäuse anhand durchgezogener Pfeile angedeutet. Es strömt in das Gehäuse, welches durch das Filtermedium 11 in eine Rohseite 32 und eine Reinseite 33 geteilt ist. Dabei findet eine Filtrierung statt, wobei sich die abgeschiedenen Partikel auf der Rohseite 32 des Filters sammeln. Zur Reinigung der Rohseite von abgeschiedenem Filtrat lässt sich durch Ventile 34 die Rückspüleinrichtung 27 aktivieren. Diese besteht zumindest aus den notwendigen Ventilmechanismen und einem rohseitig angebrachten Schlammaustrag 36.

Bei der Rückspülung entsteht kurzzeitig der durch gestrichelte Pfeile angedeutete Fluidfluss mit dessen Hilfe die Rohseite des Filtermediums 11 gereinigt und der Schmutz aus dem Gehäuse 28 ausgetragen und in einem Sammelbehälter 35 gelagert wird.

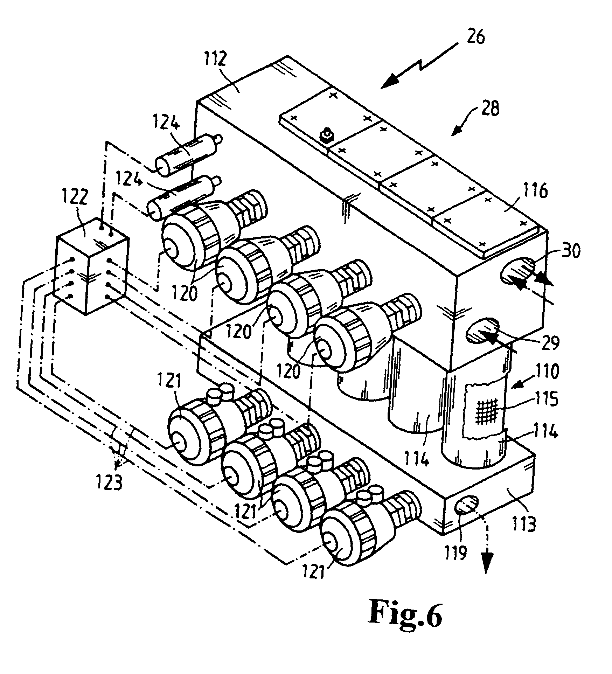

In Figur 6 ist der Aufbau eines Flüssigkeitsfilter 26 in modularer Bauweise schematisch dargestellt. Ein Filterraum 110 wird durch ein Gehäuse 28 gebildet, welches aus einem Oberteil 112 und einem Unterteil 113 besteht, die rohrförmige Zwischenstücke 114 an deren Enden dichtend abschließen. Der Filterraum 110 wird somit im wesentlichen durch die Zwischenstücke 114 gebildet. Die Filterelemente 115 werden durch dafür vorgesehene Öffnungen im Oberteil 112 in die Filterräume 110 geschoben. Die Öffnungen im Oberteil werden durch Deckel 116 verschlossen.

Das zu filternde Fluid erreicht durch den rohseitigen Einlass 29 im Oberteil die Filtereinsätze und verlässt nach der Filterung das Gehäuse durch den reinseitigen Auslass 30. Für die Rückspülung ist weiterhin ein Schlammauslass 119 im Unterteil 113 vorgesehen. Der Rückspülvorgang wird durch Schließen von Einlassventilen 120 am Einlass und Öffnen von Auslassventilen 121 am Schlammauslass realisiert. Dadurch entsteht ein Rückfluss des gereinigten Fluids durch den Schlammauslass 119, wobei auch die Durchflussrichtung durch die Filterelemente 115 umgekehrt wird. Dies hat eine Reinigung der Filtereinsätze mit anschließendem Austrag des Filterschlamms durch den Schlammauslass 119 zur Folge.

Die Betätigung der Einlassventile 120 und der Auslassventile 121 erfolgt durch eine Steuerung 122, die durch Leitungen 123 mit den Ventilen verbunden ist. Dargestellt ist eine direkte Ansteuerung von Magnetventilen zur Umkehrung der Flussrichtung am Filterelement. Alternativ können auch Druckluftventile verwendet werden, die ihrerseits von Magnetventilen angesteuert sind (nicht dargestellt). Für die Reinigung der Filtereinsätze reichen kurze Rückspülimpulse, während für den Schlammaustrag eine längere Flussumkehr nötig sein kann. Die Steuerung löst den Rückspülprozess aus, wenn Drucksensoren 124 die Überschreitung eines vorgegebenen Druckgefälles zwischen Roh- und Reinseite melden. Selbstverständlich können auch andere Auslösemechanismen wie z.B. eine Zeituhr Verwendung finden.

Der Schlammauslass 119 führt analog zur in Figur 5 beschriebenen Apparatur in einen nicht dargestellten Sammelbehälter. Durch den sehr kurzen Rückspülimpuls ist das im Sammelbehälter aufgefangene Filtrat optimal angereichert, so dass nur wenig zu reinigendes Fluid verschwendet wird. Hierdurch werden auch die Entsorgungskosten für den Schlamm verringert, da dessen Volumen gering ist.

## Patentansprüche

1. Filterelement mit einem zylindrischen, für das zu filternde Fluid durchlässigen Stützkörper (10) und einer auf diesen aufgebrachtes Filtermedium (11) zur Rückhaltung von im zu filternden Fluid enthaltenen Teilchen, **dadurch gekennzeichnet, daß** das Filtermedium (11) derart auf dem Stützkörper (10) befestigt ist, dass eine Relativbewegung zwischen diesen Bauteilen in Folge der Fluiddurchströmung des Filterelementes verhindert wird, derart dass das Filtermedium (11)
- auf mindestens 3% der durch den Stützkörper (10) zur Verfügung gestellten Stützfläche (20) spielfrei anliegt, wobei sich dieser Flächenanteil aus gleichmäßig über die Stützfläche verteilten Stützbereichen (23) zusammensetzt,
- auf höchstens 15% der Stützfläche eine radiale Spieltoleranz zu einer durch den Stützkörper gebildeten, die Stützfläche enthaltenden Mantelfläche (24) aufweist, die größer als 0,2 mm ist und
- außerhalb der genannten Bereiche der Stützfläche eine radiale Spieltoleranz zu der Mantelfläche (24) aufweist, die höchstens 0,2 mm beträgt.

2. Filterelement nach einem der vorherigen Ansprüche, **dadurch gekennzeichnet, daß** das Filtermedium (11) derart auf den Stützkörper (10) aufgebracht ist, dass es in tangentialer Richtung bezüglich des Umfanges des Stützkörper (10) lediglich unter Zugbeanspruchung steht.

3. Filterelement nach einem der vorhergehenden Ansprüche, **dadurch gekennzeichnet, daß** die Zugbeanspruchung betrachtet über die radiale Dicke des Filtermediums einen Durchschnittswert von mindestens 5 N/mm² hat.

4. Filterelement nach einem der Ansprüche 1 bis 3, **dadurch gekennzeichnet, daß** das Filtermedium durch eine Filterfolie gebildet ist, welche eine Dicke von 0,1 - 1mm aufweist, wobei an der radial außen gelegenen Oberfläche der Filterfolie eine Zugspannung von mindestens 8 N/mm² vorliegt.

5. Filterelement nach einem der vorherige Ansprüche, **dadurch gekennzeichnet, daß** die Kanten (16) des Filtermediums (11) entlang der Längsausdehnung des Filterelementes miteinander verlötet sind.

6. Filterelement nach Anspruch 5, **dadurch gekennzeichnet, daß** die Oberfläche der Lötverbindung durch einen Verstärkungsstreifen (12) vergrößert ist.

7. Filter mit einem öffenbaren Gehäuse (28) zum Einsetzen eines Filterelementes, aufweisend einen Einlass (29) für das zu filternde und einen Auslass (30) für das gefilterte Fluid, **dadurch gekennzeichnet, daß** ein Filtereinsatz gemäß einem der vorherigen Ansprüche zum Einsatz kommt.

8. Filter nach Anspruch 7, wobei dieser mit einer Rückspüleinrichtung (27) zur Abreinigung des Filtermediums (11) ausgestattet ist, **dadurch gekennzeichnet, daß** die Rückspüleinrichtung mit mindestens einem Auslassventil (121) für den Schlammablass ausgestattet ist, wobei dieses Auslassventil konstuktionsbedingt Öffnungs- und Schließzeiten von weniger als jeweils 0,4 Sekunden ermöglicht.

9. Filter nach einem der Ansprüche 7 oder 8, **dadurch gekennzeichnet, daß** Einlassventile (120) auf der Rohseite des Filters vorgesehen sind, die konstruktiv bedingt ebenfalls Öffnungs- und Schließzeiten von jeweils weniger als 0,4 Sekunden ermöglichen.

10. Verfahren zum Betrieb eines Filters gemäß einem der Ansprüche 7 bis 9 wobei zur Abreinigung eines Filterelementes des Filters zumindest ein Auslassventil (121) geöffnet wird, **dadurch** die Flussrichtung des zu filternden Fluidflusses an diesem Filterelement umgekehrt wird, wodurch ein Austrag von Schlamm und zu filterndem Fluid an einem Schlammauslass (119) bewirkt wird und Schließen zumindest des einen Auslassventil (121), **dadurch gekennzeichnet, daß** der gesamte Rückspülvorgang weniger als jeweils 2 Sekunden pro Filterelement dauert.

## Claims

1. Filter element with a cylindrical support body (10) that is permeable to the fluid to be filtered and a filtering medium (11) that is mounted on the said support body for retaining particles contained in the fluid to be filtered, **characterised in that** the filtering medium (11) is secured on the support body (10) in such a manner that a relative movement between the said components as a result of the fluid flowing through the filter element is prevented, in such a manner that the filtering medium (11)
- contacts free of play at least 3% of the support face (20) made available by the support body (10), wherein the said 3% support face portion is composed of support regions (23) that are distributed evenly over the support face,
- has, on a maximum of 15% of the support face, a radial clearance tolerance relative to an outside surface (24), which is formed by the support body, includes the support face and is greater than 0.2 mm and
- has, outside the named regions of the support face, a radial clearance tolerance relative to the outside surface (24) that is a maximum of 0.2 mm.

2. Filter element according to one of the preceding claims, **characterised in that** the filtering medium (11) is mounted on the support body (10) in such a manner that the said filtering medium is only under tensile load in the tangential direction with reference to the circumference of the supporting body (10).

3. Filter element according to one of the preceding claims, **characterised in that** the tensile load, when viewed over the radial thickness of the filtering medium, has a mean value of at least 5 N/mm².

4. Filter element according to one of claims 1 to 3, **characterised in that** the filtering medium is formed by a filter foil, which has a thickness of 0.1 - 1 mm, wherein a tensile stress of at least 8 N/mm² is present on the radially outside surface of the filter foil.

5. Filter element according to one of the preceding claims, **characterised in that** the edges (16) of the filtering medium (11) are soldered together along the longitudinal extension of the filter element.

6. Filter element according to claim 5, **characterised in that** the surface of the soldered joint is enlarged by a reinforcing strip (12).

7. Filter with an openable housing (28) for the insertion of a filter element, including an inlet (29) for the fluid to be filtered and an outlet (30) for the filtered fluid, **characterised in that** a filter insert according to one of the preceding claims is used.

8. Filter according to claim 7, wherein the said filter is provided with a reverse flow device (27) for cleaning the filtering medium (11), **characterised in that** the reverse flow device is provided with at least one outlet valve (121) for the sludge discharge, wherein the said outlet valve is designed to enable opening and closing times of less than 0.4 seconds respectively.

9. Filter according one of claims 7 or 8, **characterised in that** inlet valves (120) are provided on the unfiltered side of the filter, the said inlet valves also being designed to enable opening and closing times of less than 0.4 seconds respectively.

10. Method for operating a filter according to one of claims 7 to 9, wherein at least one outlet valve (121) is opened for cleaning a filter element of the filter, thereby causing the direction of flow of the fluid to be filtered to be reversed at the said filter element, thus causing a discharge of sludge and fluid to be filtered to be effected at a sludge outlet (119) and closing at least of the one outlet valve (121), **characterised in that** the entire reverse flow process lasts less than 2 seconds per filter element.

## Revendications

1. Élément filtrant comportant un support interne (10) cylindrique perméable au fluide à filtrer et un matériau filtrant (11) monté sur ce dernier pour retenir les particules contenues dans le fluide à filtrer,
**caractérisé en ce que**
le matériau filtrant (11) est fixé sur le support interne (10) de manière à empêcher tout mouvement relatif entre ces éléments constitutifs sous l'effet de la percolation du fluide à travers l'élément filtrant, si bien que le matériau filtrant (11)
- est en contact sans jeu avec au moins 3 % de la surface d'appui (20) mise à disposition par le support interne (10), cette proportion de surface se composant de zones d'appui (23) réparties régulièrement sur la surface d'appui,
- présente, sur 15 % au maximum de la surface d'appui, une tolérance de jeu radial supérieure à 0,2 mm par rapport à une surface enveloppe (24), formée par le support interne et comportant la surface d'appui, et
- présente en dehors des zones de la surface d'appui, une tolérance de jeu radial au maximum de 0,2 mm par rapport à la surface enveloppe (24).

2. Élément filtrant selon l'une des revendications précédentes,
**caractérisé en ce que**
le matériau filtrant (11) est monté sur le support interne (10) de manière à être uniquement sollicité en traction dans une direction tangentielle par rapport à la circonférence du support interne (11).

3. Élément filtrant selon l'une des revendications précédentes,
**caractérisé en ce que**
la contrainte de traction, considérée sur l'épaisseur radiale du matériau filtrant, a une valeur moyenne d'au moins 5 N/mm².

4. Élément filtrant selon l'une des revendications 1 à 3,
**caractérisé en ce que**
le matériau filtrant est constitué par une feuille filtrante d'une épaisseur allant de 0,1 à 1 mm, et dont la surface radialement extérieure est soumise à un effort de traction d'au moins 8 N/mm².

5. Élément filtrant selon l'une des revendications précédentes,
**caractérisé en ce que**
les bords (16) du matériau filtrant (11) sont soudés ensemble le long de l'extension longitudinal de l'élément filtrant.

6. Élément filtrant selon la revendication 5,
**caractérisé en ce que**
la surface du joint soudé est amplifiée par une bande de renfort (12).

7. Filtre comportant un boîtier (28) ouvrable destiné à l'insertion d'un élément filtrant, présentant un orifice d'entrée (29) destiné au fluide à filtrer et un orifice de sortie (30) destiné au fluide filtré,
**caractérisé en ce qu'**
on utilise une cartouche filtrante selon l'une des revendications précédentes.

8. Filtre selon la revendication 7, pourvu d'un dispositif de rinçage par contre-courant (27) permettant de nettoyer le matériau filtrant (11),
**caractérisé en ce que**
le dispositif de rinçage par contre-courant est pourvu d'au moins une vanne de décharge (121) destinée à la purge des boues dont la conception permet d'obtenir des temps d'ouverture et des temps de fermeture inférieurs à 0,4 seconde chacun.

9. Filtre selon l'une des revendications 7 ou 8,
**caractérisé en ce que**
des vannes d'admission (120), dont la conception permet également d'obtenir des temps d'ouverture et des temps de fermeture inférieurs à 0,4 seconde chacun, sont prévues du côté brut du filtre.

10. Procédé d'exploitation d'un filtre selon l'une des revendications 7 à 9, selon lequel, pour nettoyer un élément filtrant du filtre, au moins une vanne de décharge (121) doit s'ouvrir pour inverser la direction d'écoulement du fluide à filtrer au niveau de cet élément filtrant, moyennant quoi les boues et le fluide à filtrer sont évacués par un orifice de sortie des boues (119) avant de refermer l'au moins une vanne de décharge (121),
**caractérisé en ce que**
le processus total de rinçage par contre-courant dure moins de 2 secondes par élément filtrant.
